# EUROPÄISCHE PATENTSCHRIFT

(11) **EP 1 834 763 B1**
(45) Veröffentlichungstag und Bekanntmachung des Hinweises auf die Patenterteilung: **31.12.2014**
(21) Anmeldenummer: 07103308.8
(22) Anmeldetag: 01.03.2007
(51) Int. Cl.: B32B 27/32, F16L 9/12

(54) **Druckluftbremsleitung**
Compressed air brake pipe
Circuit de frein pneumatique

(30) Priorität: 14.03.2006 DE 102006011493
(43) Veröffentlichungstag der Anmeldung: 19.09.2007
(73) Patentinhaber: Degussa AG, 40474 Düsseldorf (DE)
(72) Erfinder: Dowe, Andreas, 46325, Borken (DE); Böer, Michael, 59399, Olfen (DE); Kuhmann, Karl, 48249, Dülmen (DE); Schmitz, Guido-Jan, 48249, Dülmen (DE)

(56) Entgegenhaltungen:
- EP-A2- 1 216 823
- WO-A-2006/010736
- DE-A1- 3 715 251
- DE-C1- 3 821 723
- DE-C1- 4 001 126

## Beschreibung

Gegenstand der Erfindung ist eine Druckluftbremsleitung, die mindestens zwei Polyamidschichten und mindestens eine Polypropylenschicht enthält.

Druckluftbremssysteme werden häufig in Schwerlastfahrzeugen, wie z. B. in Zugmaschinen und ähnlichem, eingesetzt. In solchen Systemen wird das Bremssystem durch Druckluft aktiviert, die durch ein Rohr geleitet wird.

Derzeit werden Druckluftbremsleitungen in erster Linie aus einschichtigen PA11- oder PA12-Rohren gefertigt; darüber hinaus gibt es mehrschichtige Lösungen, bei denen mittels Gewebeverstärkung ein hoher Berstdruck bei guter Flexibilität erzielt werden soll. In Bereichen mit geringen mechanischen und chemischen Anforderungen werden hauptsächlich Systeme auf Basis von Polyurethan eingesetzt. Hier sind insbesondere der Markt für Auflieger und der Ersatzteilmarkt zu nennen. Diese Systeme sind preisgünstiger als Systeme auf Basis von PA11 bzw. PA12, zeigen aber deutliche Nachteile in der mechanischen Festigkeit und der Chemikalienbeständigkeit.

Die höheren Polyamide wie PA612, PA11 oder PA12 sind widerstandfähig gegen Rissbildung sowie beständig gegenüber der Einwirkung von Kraftstoffen, Ölen und Wasser. Sie sind darüber hinaus, im Gegensatz zu PA6, unempfindlich gegen Spannungsrissbildung durch Zinkchlorid. Allerdings sind sie relativ teuer. Um dem Preisdruck im Markt gerecht zu werden, wird intensiv an kostengünstigen Alternativen gearbeitet.

Aus der DE-OS 37 15 251 ist ein Zweischichtrohr bekannt, das als Druckluftbremsleitung verwendet werden kann. Es besteht aus einer dicken Außenschicht aus Polyamid, etwa PA12, und einer dünnen Innenschicht aus einem Polyolefin, beispielsweise mit Maleinsäureanhydrid gepfropftem Polypropylen, das als Barriere gegenüber dem im Druckmedium vorhandenen Alkohol dienen soll. In einer Fortbildung hiervon enthält das Rohr der DE-C-38 21 723 zusätzlich noch eine innenseitige Schutzschicht aus einem Polyamid. Allerdings wird mit derartigen Rohren kein Kostenvorteil gegenüber einschichtigen Polyamidrohren erzielt.

Die WO 2006/010736 beschreibt eine Kühlmittelleitung, die eine Außenschicht aus einer Polyamidformmasse sowie eine Innenschicht aus einer wärmestabilisierten Polypropylenformmasse enthält.

In der EP 1 216 823 A2 wird ein als Durckluftbremsleitung verwendbarer Mehrschichtverbund beschrieben, der eine Schicht I aus einer Polyamidformmasse, eine Schicht II aus einem näher definierten Haftvermittler und eine Schicht III aus einer Polyolefinformmasse enthält, wobei diese Schichten unmittelbar miteinander verbunden sind.

Die DE 40 01 126 C1 offenbart eine als Druckluftbremsleitung verwendbare Kraftfahrzeugrohrleitung mit einer Außenschicht aus PA11 oder PA12, einer dünnen Haftvermittlerschicht aus Polyethylen oder Polypropylen sowie einer Lösungsinhibitorschicht aus einem Ethylen-Vinylalkohol-Copolymeren.

Gegenstand der US 2004/0071913 A1 ist eine Druckluftbremsleitung mit Innen- und Außenschicht aus einem Polyamid wie z. B. PA12 und einer Zwischenschicht aus Polyamid-Polyolefin-Blends mit Polyamidmatrix oder Copolymeren aus Polyamidblöcken und Polyetherblöcken.

Die WO 01/64436 beschreibt ein Mehrschichtrohr mit einer Polyamid-Innenschicht; die Mittelschicht und die Außenschicht bestehen aus näher spezifizierten Polypropylenformmassen. Dieses Rohr soll für Kraftstoffleitungssysteme, druckführende Leitungen und andere Leitungen im Automobilbau geeignet sein. Rohre mit Polypropylen-Außenschicht werden aber unter anderem wegen der nicht ausreichenden Alterungsbeständigkeit des Polypropylens kritisiert.

Eine weitere technische Lösung für eine Druckluftbremsleitung wird in der DE-A-101 37 863 beschrieben; sie besteht aus einem Rohr mit der Schichtenfolge PA11 oder PA12/Haftvermittler/schlagzähmodifiziertes PA6 oder PA66; gegebenenfalls schließen sich hieran noch eine weitere Haftvermittlerschicht sowie eine abschließende Schicht aus PA11 oder PA12 an. Alternativ hierzu kann das Rohr der DE-A-101 37 863 die Schichtenfolge PA612/schlagzähmodifiziertes PA6 oder PA66/PA612 besitzen. Da die PA6- bzw. PA66-Schicht stirnseitig ungeschützt vorliegt, ist die mangelhafte Beständigkeit gegenüber Zinkchlorid bei diesen Systemen als kritisch zu betrachten.

Die Aufgabe der vorliegenden Erfindung besteht darin, die obengenannten Nachteile zu vermeiden und insbesondere ein kostengünstiges Rohr zur Verfügung zu stellen, das die an eine Druckluftbremsleitung gestellten Anforderungen im Hinblick auf Beständigkeit gegenüber Chemikalien, Motorölen, Zinkchlorid und Streusalzen erfüllt und das eine hohe Berstdruckfestigkeit sowie eine gute Kälteschlagzähigkeit aufweist.

Diese Aufgabe wurde mit Hilfe einer Druckluftbremsleitung gelöst, die folgende Schichten enthält:
**I**. Eine Außenschicht aus einer Formmasse, die zu mindestens 40 Gew.-%, mindestens 45 Gew.-%, mindestens 50 Gew.-%, mindestens 55 Gew.-% bzw. mindestens 60 Gew.-% ein Polyamid enthält, dessen Monomereinheiten im Mittel mindestens 8, mindestens 9 bzw. mindestens 10 C-Atome enthalten;
**II**. gegebenenfalls eine Schicht aus einer haftvermittelnden Formmasse sowie
**III**. eine Schicht aus einer Polypropylenformmasse,
wobei diese Schichten bevorzugt direkt aufeinander folgen, und wobei sich an die Schicht gemäß III. gegebenenfalls eine weitere Schicht gemäß II. sowie eine weitere Schicht gemäß I. anschließt, so dass sowohl die Außenschicht als auch die Innenschicht aus einer Polyamidformasse besteht. Bei dieser symmetrischen Schichtenfolge sind die Schichtenkonfigurationen I/III/I sowie I/II/III/II/I bevorzugt.

Der Außendurchmesser des Rohres liegt im Bereich von 6 bis 20 mm und bevorzugt im Bereich von 7 bis 16 mm, während die Wanddicke 1,0 bis 2,0 mm betragen kann. Die Dicke der Schicht gemäß III. beträgt hierbei 25 bis 75 %, bevorzugt 30 bis 65 % und besonders bevorzugt 35 bis 60 % der Wanddicke, während die Dicke der Schicht bzw. Schichten gemäß II. jeweils 0,02 bis 0,2 mm, bevorzugt 0,04 bis 0,16 mm und besonders bevorzugt 0,06 bis 0,14 mm beträgt.

Das Polyamid der Schicht gemäß I. ist herstellbar aus einer Kombination von Diamin und Dicarbonsäure, aus einer ω-Aminocarbonsäure oder dem entsprechenden Lactam. Hierbei enthält die ω-Aminocarbonsäure bzw. das Lactam mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mitverwendet werden können, vorausgesetzt das Mittel der Anzahl der C-Atome hält die obengenannte Bedingung ein.

Das Polyamid kann auch ein Polyetheresteramid oder ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als JEFFAMIN^{®} D-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombination PA12/PA1012, PA12/PA1212, PA612/PA12, PA613/PA12, PA1014/PA12 und PA610/PA12 aufgeführt. Im Zweifelsfall können verträgliche Kombinationen durch Routineversuche ermittelt werden.

Das Polyamid weist bevorzugt einen Überschuss an Aminoendgruppen auf, der in der Regel davon herrührt, dass bei der Herstellung ein Diamin als Molekulargewichtsregler eingesetzt wurde. Der Überschuss an Aminoendgruppen kann auch durch Mischen eines aminogruppenarmen und eines aminogruppenreichen Polyamids eingestellt werden. Das Verhältnis von Aminoendgruppen zu Carboxylendgruppen sollte mindestens 51 : 49, bevorzugt mindestens 55 : 45, besonders bevorzugt mindestens 60 : 40 und insbesondere bevorzugt mindestens 70 : 30 betragen.

Neben Polyamid kann die Formmasse der Schicht gemäß I. weitere Komponenten enthalten wie z. B. Schlagzähmodifikatoren, andere Thermoplaste, Weichmacher und andere übliche Zusatzstoffe. Erforderlich ist nur, dass das Polyamid die Matrix der Formmasse bildet.

Geeignete Schlagzähmodifikatoren sind beispielsweise Ethylen/α-Olefin-Copolymere, vorzugsweise ausgewählt aus
a) Ethylen/C₃- bis C₁₂-α-Olefin-Copolymeren mit 20 bis 96, bevorzugt 25 bis 85 Gew.-% Ethylen. Als C₃- bis C₁₂-α-Olefin wird beispielsweise Propen, 1-Buten, 1-Penten, 1-Hexen, 1-Octen, 1-Decen oder 1-Dodecen eingesetzt. Typische Beispiele hierfür sind Ethylen-Propylen-Kautschuk sowie LLDPE und VLDPE.
b) Ethylen/C₃- bis C₁₂-α-Olefin/unkonjugiertes Dien-Terpolymeren mit 20 bis 96, bevorzugt 25 bis 85 Gew.-% Ethylen und bis maximal etwa 10 Gew.-% eines unkonjugierten Diens wie Bicyclo(2.2.1)heptadien, Hexadien-1.4, Dicyclopentadien oder 5-Ethylidennorbornen. Als C₃- bis C₁₂-α-Olefin sind ebenfalls beispielsweise Propen, 1-Buten, 1-Penten, 1-Hexen, 1-Octen, 1-Decen oder 1-Dodecen geeignet.

Die Herstellung dieser Copolymere bzw. Terpolymere, beispielsweise mit Hilfe eines Ziegler-Natta-Katalysators, ist Stand der Technik.

Andere geeignete Schlagzähmodifikatoren sind Styrol-Ethylen/Butylen-Blockcopolymere. Hierbei werden vorzugsweise Styrol-Ethylen/Butylen-Styrol-Blockcopolymere (SEBS) eingesetzt, die durch Hydrierung von Styrol-Butadien-Styrol-Blockcopolymeren erhältlich sind. Es können aber auch Diblocksysteme (SEB) oder Multiblocksysteme verwendet werden. Derartige Blockcopolymere sind Stand der Technik.

Diese Schlagzähmodifikatoren enthalten vorzugsweise Säureanhydridgruppen, die auf bekannte Weise durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Geeignete Reagentien sind beispielsweise Maleinsäure, Maleinsäureanhydrid, Maleinsäuremonobutylester, Fumarsäure, Citraconsäureanhydrid, Aconitsäure oder Itaconsäureanhydrid. Auf diese Weise sind vorzugsweise 0,1 bis 4 Gew.-% eines ungesättigten Anhydrids an den Schlagzähmodifikator aufgepfropft. Gemäß dem Stand der Technik kann das ungesättigte Dicarbonsäureanhydrid oder dessen Vorstufe auch zusammen mit einem weiteren ungesättigten Monomeren wie beispielsweise Styrol, α-Methylstyrol oder Inden aufgepfropft werden.

Andere geeignete Schlagzähmodifikatoren sind Copolymere, die Einheiten der folgenden Monomere enthalten:
a) 20 bis 94,5 Gew.-% eines oder mehrerer α-Olefine mit 2 bis 12 C-Atomen,
b) 5 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C1- bis C12-Alkohol, die gegebenenfalls eine freie Hydroxyl- oder Epoxidfunktion tragen können,
   - Acrylnitril bzw. Methacrylnitril,
   - Acrylamiden bzw. Methacrylamiden,
c) 0,5 bis 50 Gew.-% eines olefinisch ungesättigten Epoxids, Carbonsäureanhydrids, Carbonsäureimids, Oxazolins oder Oxazinons.

Dieses Copolymere ist beispielsweise aus folgenden Monomeren zusammengesetzt, wobei diese Aufzählung nicht erschöpfend ist:
a) α-Olefine wie beispielsweise Ethylen, Propen, 1-Buten, 1-Penten, 1-Hexen, 1-Octen, 1-Decen oder 1-Dodecen;
b) Acrylsäure, Methacrylsäure oder deren Salze, beispielsweise mit Na^{⊕} oder Zn^{2⊕} als Gegenion; Methylacrylat, Ethylacrylat, n-Propylacrylat, n-Butylacrylat, Isobutylacrylat, n-Hexylacrylat, n-Octylacrylat, 2-Ethylhexylacrylat, Isononylacrylat, Dodecylacrylat, Methylmethacrylat, Ethylmethacrylat, n-Propylmethacrylat, n-Butylmethacrylat, Isobutylmethacrylat, 2-Ethylhexylmethacrylat, Hydroxyethylacrylat, 4-Hydroxybutylmethacrylat, Glycidylacrylat, Glycidylmethacrylat, Acrylnitril, Methacrylnitril, Acrylamid, N-Methylacrylamid, N,N-Dimethylacrylamid, N-Ethylacrylamid, N-Hydroxyethylacrylamid, N-Propylacrylamid, N-Butylacrylamid, N-(2-Ethylhexyl)acrylamid, Methacrylamid, N-Methylmethacrylamid, N,N-Dimethylmethacrylamid, N-Ethylmethacrylamid, N-Hydroxyethylmethacrylamid, N-Propylmethacrylamid, N-Butylmethacrylamid, N,N-Dibutylmethacrylamid, N-(2-Ethylhexyl)methacrylamid;
c) Vinyloxiran, Allyloxiran, Glycidylacrylat, Glycidylmethacrylat, Maleinsäureanhydrid, Aconitsäureanhydrid, Itaconsäureanhydrid, ferner die aus diesen Anhydriden durch Reaktion mit Wasser entstehenden Dicarbonsäuren; Maleinimid, N-Methylmaleinimid, N-Ethylmaleinimid, N-Butylmaleinimid, N-Phenylmaleinimid, Aconitsäureimid, N-Methylaconitsäureimid, N-Phenylaconitsäureimid, Itaconsäureimid, N-Methylitaconsäureimid, N-Phenylitaconsäureimid, N-Acryloylcaprolactam, N-Methacryloylcaprolactam, N-Acryloyllaurinlactam, N-Methacryloyllaurinlactam, Vinyloxazolin, Isopropenyloxazolin, Allyloxazolin, Vinyloxazinon oder Isopropenyloxazinon.

Bei einer Verwendung von Glycidylacrylat oder Glycidylmethacrylat fungieren diese gleichzeitig auch als acrylische Verbindung b), so dass bei ausreichender Menge des Glycidyl(meth)acrylats keine weitere acrylische Verbindung enthalten zu sein braucht. In dieser speziellen Ausführungsform enthält das Copolymere Einheiten der folgenden Monomere:
a) 20 bis 94,5 Gew.-% eines oder mehrerer α-Olefine mit 2 bis 12 C-Atomen,
b) 0 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C₁- bis C₁₂-Alkohol,
   - Acrylnitril bzw. Methacrylnitril,
   - Acrylamiden bzw. Methacrylamiden
c) 0,5 bis 80 Gew.-% eines Esters von Acrylsäure oder Methacrylsäure, der eine Epoxidgruppe enthält,
wobei die Summe von b) und c) mindestens 5,5 Gew.-% ergibt.

Das Copolymere kann in kleiner Menge weitere einpolymerisierte Monomere enthalten, sofern diese die Eigenschaften nicht nennenswert beeinträchtigen, wie beispielsweise Maleinsäuredimethylester, Fumarsäuredibutylester, Itaconsäurediethylester oder Styrol.

Die Herstellung derartiger Copolymerer ist Stand der Technik. Eine Vielzahl verschiedener Typen hiervon ist als Handelsprodukt erhältlich, beispielsweise unter der Bezeichnung LOTADER® (Arkema; Ethylen/Acrylat/Terkomponente bzw. Ethylen/Glycidylmethacrylat).

In einer bevorzugten Ausführungsform enthält die Formmasse der Schicht gemäß I. hierbei folgende Komponenten:
1. 60 bis 96,5 Gew.-Teile des Polyamids,
2. 3 bis 39,5 Gew.-Teile einer Schlagzähkomponente, die Säureanhydridgruppen enthält, wobei die Schlagzähkomponente ausgewählt ist aus Ethylen/α-Olefin-Copolymeren und Styrol-Ethylen/Butylen-Blockcopolymeren,
3. 0,5 bis 20 Gew.-Teile eines Copolymeren, das Einheiten der folgenden Monomere enthält:
   a) 20 bis 94,5 Gew.-% eines oder mehrerer α-Olefine mit 2 bis 12 C-Atomen,
   b) 5 bis 79,5 Gew.-% einer oder mehrerer acrylischer Verbindungen, ausgewählt aus
      - Acrylsäure bzw. Methacrylsäure bzw. deren Salzen,
      - Estern von Acrylsäure bzw. Methacrylsäure mit einem C₁- bis C₁₂-Alkohol, die gegebenenfalls eine freie Hydroxyl- oder Epoxidfunktion tragen können,
      - Acrylnitril bzw. Methacrylnitril,
      - Acrylamiden bzw. Methacrylamiden,
   c) 0,5 bis 50 Gew.-% eines olefinisch ungesättigten Epoxids, Carbonsäureanhydrids, Carbonsäureimids, Oxazolins oder Oxazinons,
wobei die Summe der Gewichtsteile der Komponenten gemäß 1., 2. und 3. 100 beträgt.

In einer weiteren bevorzugten Ausführungsform enthält die Formmasse hierbei:
1. 65 bis 90 Gew.-Teile und besonders bevorzugt 70 bis 85 Gew.-Teile des Polyamids,
2. 5 bis 30 Gew.-Teile, besonders bevorzugt 6 bis 25 Gew.-Teile und insbesondere bevorzugt 7 bis 20 Gew.-Teile der Schlagzähkomponente,
3. 0,6 bis 15 Gew.-Teile und besonders bevorzugt 0,7 bis 10 Gew.-Teile des Copolymeren, welches bevorzugt Einheiten der folgenden Monomere enthält:
   a) 30 bis 80 Gew.-% α-Olefin(e),
   b) 7 bis 70 Gew.-% und besonders bevorzugt 10 bis 60 Gew.-% der acrylischen Verbindung(en),
   c) 1 bis 40 Gew.-% und besonders bevorzugt 5 bis 30 Gew.-% des olefinisch ungesättigten Epoxids, Carbonsäureanhydrids, Carbonsäureimids, Oxazolins oder Oxazinons.

Andere Thermoplaste , die in der Formmasse der Schicht gemäß I. enthalten sein können, sind in erster Linie Polyolefine. Sie können in einer Ausführungsform, wie weiter oben bei den Schlagzähmodifikatoren beschrieben, Säureanhydridgruppen enthalten und dann gegebenenfalls zusammen mit einem unfunktionalisierten Schlagzähmodifikator vorliegen. In einer weiteren Ausführungsform sind sie nicht funktionalisiert und liegen in der Formmasse in Kombination mit einem funktionalisierten Schlagzähmodifikator oder einem funktionalisierten Polyolefin vor. Der Begriff "funktionalisiert" bedeutet, dass die Polymere gemäß dem Stand der Technik mit Gruppen versehen sind, die mit den Polyamid-Endgruppen reagieren können, z. B. Säureanhydridgruppen, Carboxylgruppen, Epoxidgruppen oder Oxazolingruppen. Hierbei sind folgende Zusammensetzungen bevorzugt:
1. 50 bis 95 Gew.-Teile des Polyamids,
2. 1 bis 49 Gew.-Teile funktionalisiertes oder unfunktionalisiertes Polyolefin sowie
3. 1 bis 49 Gew.-Teile funktionalisierter oder unfunktionalisierter Schlagzähmodifikator,
wobei die Summe der Gewichtsteile der Komponenten gemäß 1., 2., und 3. 100 beträgt.

Beim Polyolefin handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, Ethylen-Acrylester-Copolymere, Ethylen-Vinylacetat-Copolymere, isotaktisches oder ataktisches Homopolypropylen, Randomcopolymere von Propen mit Ethen und/oder Buten-1, Ethylen-Propylen-Blockcopolymere und dergleichen mehr. Das Polyolefin kann nach jedem bekannten Verfahren hergestellt werden, beispielsweise nach Ziegler-Natta, nach dem Phillips-Verfahren, mittels Metallocenen oder radikalisch.

Darüber hinaus können als andere Thermoplaste auch andere Polyamide wie beispielsweise PA6 in Mengen eingesetzt werden, die niedriger sind als die des anspruchsgemäß eingesetzten Polyamids.

In einer bevorzugten Ausführungsform enthält die Formmasse 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, können Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure.

Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Darüber hinaus kann die Formmasse noch kleinere Mengen von Zusatzstoffen enthalten, die zum Einstellen bestimmter Eigenschaften benötigt werden. Beispiele hierfür sind Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel wie Magnesiumhydroxid, Aluminiumhydroxid oder Melamincyanurat, Glasfasern, Antioxidantien, UV-Stabilisatoren sowie Zusätze, die dem Produkt antielektrostatische Eigenschaften oder eine elektrische Leitfähigkeit verleihen wie z. B. Kohlenstofffasern, Graphitfibrillen, Fasern aus rostfreiem Stahl bzw. Leitfähigkeitsruß.

Bei einer symmetrischen Schichtenfolge, bei der zwei Schichten gemäß I. vorliegen, können sich die jeweiligen Formmassen in der Art des Polyamids sowie in der Art und Menge der anderen Komponenten unterscheiden. Bevorzugt ist jedoch, dass beide Formmassen identisch sind, da dann beide Schichten von einem einzigen Extruder gespeist werden können.

Um die anwendungstechnisch erwünschte Flexibilität der Leitung sicherzustellen, beträgt der Zug-E-Modul gemäß ISO 527 der Polyamidformmasse, d.h. der die Schicht bzw. Schichten gemäß I. bildenden Formmasse, bevorzugt 300 bis 800 MPa und besonders bevorzugt 400 bis 600 MPa.

Die Art des Haftvermittlers der Schicht gemäß II. ist unkritisch. Es kann jeder Haftvermittler verwendet werden, der die Schichten gemäß I. und III. ausreichend fest miteinander verbindet, so dass sie bei der Herstellung sowie bei der anschließenden Verwendung nicht delaminieren. Im einfachsten Fall ist der Haftvermittler ein Polypropylen, das Säureanhydridgruppen enthält, die auf bekannte Weise durch thermische oder radikalische Reaktion des Polypropylens mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid der benachbarten Schicht ausreicht. Geeignete Reagentien sind beispielsweise Maleinsäure, Maleinsäureanhydrid, Maleinsäuremonobutylester, Fumarsäure, Aconitsäure oder Itaconsäureanhydrid. Auf diese Weise sind vorzugsweise 0,1 bis 4 Gew.-% eines ungesättigten Anhydrids auf das Polypropylen aufgepfropft. Gemäß dem Stand der Technik kann das ungesättigte Dicarbonsäureanhydrid oder dessen Vorstufe auch zusammen mit einem weiteren ungesättigten Monomeren wie beispielsweise Styrol, α-Methylstyrol oder Inden aufgepfropft werden. Der Haftvermittler kann jedoch auch ein Blend aus einem derartigen, Säureanhydridgruppen tragenden Polypropylen und einem Polyamid sein. Darüber hinaus kann der Haftvermittler auch unfunktionalisiertes Polypropylen enthalten. Weitere geeignete Haftvermittler sind aus Polyamid, funktionalisiertem Ethylen-Propylen-Kautschuk und unfunktionalisiertem Polypropylen zusammengesetzt. Geeignet sind auch die in der EP-A-1 216 823 offenbarten Haftvermittler. Wenn der Haftvermittler ein Polyamid enthält, ist hier entweder das gleiche Polyamid zu wählen wie in der Schicht gemäß I. oder eines, das damit ausreichend verträglich ist, um darauf zu haften.

Die Polypropylenformmasse der Schicht gemäß III. kann grundsätzlich jeden handelsüblichen Polypropylentyp enthalten, beispielsweise isotaktisches oder syndiotaktisches Homopolypropylen, ein Randomcopolymer von Propen mit Ethen und/oder Buten-1, ein Ethylen-Propylen-Blockcopolymer und dergleichen. Das Polypropylen kann nach jedem bekannten Verfahren hergestellt werden, beispielsweise nach Ziegler-Natta oder mittels Metallocenkatalyse. Es kann eine Schlagzähkomponente wie z. B. EPM- oder EPDM-Kautschuk oder SEBS enthalten. Darüber hinaus können die üblichen Hilfs- und Zusatzstoffe enthalten sein, beispielsweise Pigmente bzw. Füllstoffe wie Ruß, Titandioxid, Zinksulfat, Silikate oder Carbonate, Stabilisatoren oder Verarbeitungshilfsmittel wie Wachse, Zinkstearat oder Calciumstearat. Übliche Anteile an Polypropylen in der Formmasse sind beispielsweise mindestens 50 Gew.-%, mindestens 60 Gew.-%, mindestens 70 Gew.-%, mindestens 80 Gew.-% oder mindestens 90 Gew.-%.

In einer möglichen Ausführungsform besitzt das verwendete Polypropylen der innersten Schicht eine Melt Flow Rate (MFR) gemäß ISO 1133 (230 °C/2,16 kg) im Bereich von 0,1 bis 3 g/10 min, besonders bevorzugt im Bereich von 0,15 bis 2 g/10 min, insbesondere bevorzugt im Bereich von 0,18 bis 1,5 g/10 min und ganz besonders bevorzugt im Bereich von 0,2 bis 1 g/10 min.

Vorzugsweise ist das Polypropylen der Schicht gemäß III. ein sogenanntes Propen-Ethen-Blockcopolymer, häufig auch als Heterophasen-Copolymer bezeichnet. Derartige Heterophasen-Copolymere können beispielsweise in einem zweiphasigen Prozess hergestellt werden, der in etwa wie folgt abläuft: Zuerst wird, z. B. mit einem Ziegler-Natta-Katalysator, ein hoch isotaktisches Polypropylen hergestellt, wobei unter Umständen eine kleine Menge Ethen anwesend sein kann, was ein Random-Polymerisat ergibt. Dieses Material fungiert als Matrix eines Heterophasen-Copolymers. In einem zweiten Reaktionsschritt (gegebenenfalls in einem anderen Reaktor) wird gegebenenfalls ein zweiter Katalysator eingebracht, z. B. ein Metallocenkatalysator. Nun erfolgt eine Copolymerisation von Ethen mit Propen, wobei sich diese Polymerisation in Hohlräumen des ersten Polymerisats abspielt. Dadurch wird das zweite Polymerisat dort eingelagert.

Das Blockcopolymer bzw. Heterophasen-Copolymer enthält in einer bevorzugten Ausführungsform mindestens 0,5 Gew.-%, mindestens 0,6 Gew.-%, mindestens 0,7 Gew.-%, mindestens 0,8 Gew.-% oder mindestens 0,9 Gew.-% sowie maximal 20 Gew.-%, maximal 15 Gew.-%, maximal 12 Gew.-%, maximal 10 Gew.-% oder maximal 8 Gew.-% an Ethen einpolymerisiert. Darüber hinaus können bis zu 15 Gew.-% 1-Buten einpolymerisiert sein.

Das Polypropylen der Schicht gemäß III. kann funktionalisiert sein, beispielsweise mit Säureanhydridgruppen, so wie es weiter oben für das Polypropylen der Schicht gemäß II. beschrieben ist. Hiermit kann eine direkte Haftung zur Schicht gemäß I. erzielt werden, so dass die Verwendung einer Haftvermittlerschicht gemäß II. in diesem Fall nicht nötig ist.

Selbstverständlich kann in diesem Fall auch eine Mischung aus einem unfunktionalisierten und einem funktionalisierten Polypropylen eingesetzt werden, beispielsweise im Gewichtsverhältnis 95 : 5 bis 1 : 99, wobei Gewichtsverhältnisse von 75 : 25 bis 25 : 75 bevorzugt und Gewichtsverhältnisse von 60 : 40 bis 40 : 60 besonders bevorzugt sind.

Bei erhöhten Anforderungen an die Berstdruckfestigkeit kann das Rohr zusätzlich eine Gewebeverstärkung entsprechend dem Stand der Technik enthalten. Diese kann entweder innerhalb einer Schicht oder zwischen zwei Schichten liegen. Aus Fertigungssicht ist das Aufbringen der Gewebeschicht auf die Außenschicht des Rohrs mit anschließender Kautschukbeschichtung technisch am einfachsten zu realisieren. Als Kautschuk kommt hier entweder ein vulkanisierbarer Kautschuk in Frage oder ein thermoplastisches Elastomer wie z. B. Santopren. Die Beschichtung mit Kautschuk kann auch erfolgen, ohne dass eine Gewebeschicht aufgebracht wird.

Das erfindungsgemäße Rohr wird als Druckluftbremsleitung, etwa in Lastkraftwagen, Aufliegern, Anhängern für Lastkraftwagen oder Trailern verwendet. In Lastkraftwagen werden die Leitungen in der Regel mit einem Betriebsdruck von bis zu 12,5 bar, bei Aufliegern bzw. Trailern mit 8,5 bar betrieben.

Die Erfindung wird nachfolgend beispielhaft erläutert.
In den Beispielen wurden folgende Formmassen verwendet:
- PA:: VESTAMID^{®} X7297, ein schlagzähmodifiziertes, weichmacherhaltiges PA12 mit einem Aminoendgruppengehalt von 40 mmol/kg, einem Carboxylendgruppengehalt von 12 mmol/kg und einem Zug-E-Modul von 400 MPa.
- HV:: ADMER^{®} QB520E, ein mit Maleinsäureanhydrid funktionalisiertes Polypropylen
- PP 1:: VESTAMID^{®} PP SX8100, ein stabilisiertes Heterophasen-Copolymer auf Basis von Propen mit einem Ethengehalt von 2,4 Gew.-% (bestimmt über ¹³C-NMR) und einem MFR 230/2,16 gemäß ISO 1133 von 0,4 cm³/10 min.
- PP 2:: eine Mischung aus 50 Gew.-% VESTAMID^{®} SX8100 und 50 Gew.-% ADMER^{®} QB520E.

Auf einer Mehrschichtextrusionsanlage wurden Mehrschichtrohre entsprechend den Beispielen 1 bis 10 mit einem Außendurchmesser von 8 mm und einer Wandstärke von 1 mm hergestellt, die anschließend geprüft wurden. Die Details sind in der Tabelle 1 zusammengestellt. Man erkennt, dass auch bei beträchtlichem Polypropylenanteil die Anforderungen hinsichtlich der mechanischen Daten und insbesondere der Berstdruckfestigkeit erfüllt werden.

**Tabelle 1: Rohraufbauten und Prüfergebnisse**

| **Beispiel** | **1** | **2** | **3** | **4** | **5*)** | **6*)** | **7*)** | **8*)** | **9*)** | **10** |
|---|---|---|---|---|---|---|---|---|---|---|
| 1. Schicht (Außenschicht) | 0,1 mm PA | 0,15 mm PA | 0,2 mm PA | 0,25 mm PA | 0,2 mm PA | 0,3 mm PA | 0,4 mm PA | 0,5 mm PA | 0,5 mm PA | 0,25 mm PA |
| 2. Schicht | 0,1 mm HV | 0,1 mm HV | 0,1 mm HV | 0,1 mm HV | 0,1 mm HV | 0,1 mm HV | 0,1 mm HV | 0,1 mm HV | 0,5 mm PP2 | 0,5 mm PP2 |
| 3. Schicht | 0,6 mm PP | 0,5 mm PP1 | 0,4 mmPP1 | 0,3 mmPP1 | 0,7 mm PP1 | 0,6 mm PP1 | 0,5 mm PP1 | 0,4 mm PP1 | | 0,25 mm PA |
| 4. Schicht | | 0,1 mm HV | 0,1 mm HV | 0,1 mm HV | | | | | | |
| 5. Schicht | 0,1 mm PA | 0,15 mm PA | 0,2 mm PA | 0,25 mm PA | | | | | | |
| Kälteschlagfestigkeit [Bruchquote] | | | | | | | | | | |
| - extrusionsfrisch gemäß DIN 73378 6.4.6, -40 °C | 1/10 | 0/10 | 0/10 | 0/10 | 0/10 | 0/10 | 0/10 | 0/10 | 0/10 | 0/10 |
| - extrusionsfrisch gemäß SAE J2260 7.6, -40 °C | 2/10 | 0/10 | 0/10 | 1/10 | 0/10 | 0/10 | 0/10 | 0/10 | 0/10 | 0/10 |
| - extrusionsfrisch gemäß SAE J844. - 40°C | 1/10 | 0/10 | 0/10 | 0/10 | 2/10 | 1/10 | 0/10 | 0/10 | 0/10 | 0/10 |
| Zugprüfung gemäß ISO 527 | | | | | | | | | | |
| - Zugfestigkeit [N/mm²] | 23,7 | 24,6 | 25,2 | 26,5 | 22,6 | 23,3 | 24,0 | 26,2 | 25,0 | 26,0 |
| - Reißdehnung [%] | 253 | 263 | 237 | 231 | 237 | 205 | 225 | 195 | 198 | 215 |
| - Zug-E-Modul [N/mm²] | 741 | 695 | 622 | 554 | 742 | 693 | 593 | 589 | 580 | 612 |
| Berstdruck gemäß SAE J844 bei 10 bar/s [bar] | | | | | | | | | | |
| - bei 23 °C | 63,3 | 60,5 | | 58,8 | 62,4 | | 58,1 | 63,3 | 60,8 | 61,3 |
| - bei 100°C | | 20,0 | | | | | 22,0 | | | |
| Vergleichsspannung gemäß SAE J844 [MPa] | | | | | | | | | | |
| - bei 23 °C | 23,5 | 22,8 | | 23,6 | 23,4 | | 23,1 | 24,2 | 22,1 | 21,7 |
| - bei 100 °C | | 7,6 | | | | | 8,7 | | | |
| Minimaler Biegeradius gemäß SAE J844 [mm] | 40 | 37 | 40 | 37 | 38 | 40 | 40 | 37 | 39 | 37 |
| Biegeeigenschaften gemäß GME 08100 7.7 | | | | | | | | | | |
| - maximale Biegekraft | 74,5 | 74,8 | 71,2 | 62,7 | 74,9 | 78,5 | 66,9 | 73,3 | 68,3 | 71,2 |
| - Durchbiegung bei maximaler Biegekraft | 4,9 | 5,0 | 5,6 | 6,1 | 4,6 | 4,9 | 5,0 | 5,4 | 5,1 | 5,0 |
| - Biegekraft bei 3,5 mm Durchbiegung | 72,2 | 72,3 | 67,4 | 58,6 | 73,3 | 76,2 | 64,8 | 69,6 | 66,8 | 68,7 |

| | | | | | | | | | | |
|---|---|---|---|---|---|---|---|---|---|---|
| *) nicht erfindungsgemäß | | | | | | | | | | |

## Patentansprüche

1. Druckluftbremsleitung, die folgende Schichten enthält:
I. Eine Außenschicht aus einer Formmasse, die zu mindestens 40 Gew.-% ein Polyamid enthält, dessen Monomereinheiten im Mittel mindestens 8 C-Atome enthalten,
III. eine Schicht aus einer Polypropylenformmasse,
sowie eine Innenschicht gemäß I. aus einer Formmasse, die zu mindestens 40 Gew.-% ein Polyamid enthält, dessen Monomereinheiten im Mittel mindestens 8 C-Atome enthalten,
wobei
a) der Außendurchmesser des Rohres im Bereich von 6 bis 20 mm liegt,
b) die Wanddicke im Bereich von 1,0 bis 2,0 mm liegt und
c) die Dicke der Schicht gemäß III. 25 bis 75 % der Wanddicke beträgt.

2. Druckluftbremsleitung gemäß Anspruch 1,
**dadurch gekennzeichnet,**
**dass** zwischen den Schichten gemäß I. und III. folgende Schicht angeordnet ist:
II. Eine Schicht aus einer haftvermittelnden Formmasse, wobei die Dicke dieser Schicht 0,02 bis 0,2 mm beträgt.

3. Druckluftbremsleitung gemäß einem der vorhergehenden Ansprüche,
**dadurch gekennzeichnet,**
**dass** das Rohr die Schichtenkonfiguration I/II//III/II/I enthält.

4. Druckluftbremsleitung gemäß einem der vorhergehenden Ansprüche,
**dadurch gekennzeichnet,**
**dass** die Polyamidformmasse der Schicht gemäß I. weitere Komponenten enthält, die ausgewählt sind aus der Gruppe Schlagzähmodifikatoren, andere Thermoplaste, Weichmacher, Pigmente, Füllstoffe, Verarbeitungshilfsmittel, Flammschutzmittel, Glasfasern, Antioxidantien, UV-Stabilisatoren sowie Zusätze, die dem Produkt antielektrostatische Eigenschaften oder eine elektrische Leitfähigkeit verleihen, wobei das Polyamid die Matrix der Formmasse bildet.

5. Druckluftbremsleitung gemäß einem der vorhergehenden Ansprüche,
**dadurch gekennzeichnet,**
**dass** die Polyamidformmasse der Schicht gemäß I. folgende Komponenten enthält:
- 50 bis 95 Gew.-Teile Polyamid,
- 1 bis 49 Gew.-Teile funktionalisiertes oder unfunktionalisiertes Polyolefin sowie
- 1 bis 49 Gew.-Teile funktionalisierter oder unfunktionalisierter Schlagzähmodifikator,
wobei die Summe der Gewichtsteile dieser Komponenten 100 beträgt.

6. Druckluftbremsleitung gemäß einem der vorhergehenden Ansprüche,
**dadurch gekennzeichnet,**
**dass** der E-Modul gemäß ISO 527 der die Schicht bzw. Schichten gemäß I. bildenden Formmasse 300 bis 800 MPa beträgt.

## Claims

1. An air-brake line which comprises the following layers:
I. An outer layer composed of a molding composition which comprises at least 40% by weight of a polyamide whose monomer units contain an average of at least 8 carbon atoms,
III. a layer composed of a polypropylene molding composition,
and an inner layer according to I. composed of a molding composition which comprises at least 40% by weight of a polyamide whose monomer units contain an average of at least 8 carbon atoms,
a) the outer diameter of the pipe being in the range from 6 to 20 mm,
b) the wall thickness being in the range from 1.0 to 2.0 mm, and
c) the thickness of the layer of III. being from 25 to 75% of the wall thickness.

2. An air-brake line according to claim 1,
**characterized in that**
the following layer has been arranged between the layers of I. and III.:
II. A layer composed of an adhesion-promoting molding composition, the thickness of this layer being from 0.02 to 0.2 mm.

3. An air-brake line according to any one of the preceding claims,
**characterized in that**
the pipe comprises the layer configuration I/II/III/II/I.

4. An air-brake line according to any one of the preceding claims,
**characterized in that**
the polyamide molding composition of the layer of I. comprises other components selected from the group of impact modifier, other thermoplastic, plasticizer, pigment, filler, processing aid, flame retardant, glass fiber, antioxidant, UV stabilizer, and also additive giving electrical conductivity or antielectrostatic property to the product, the polyamide forming the matrix of the molding composition.

5. An air-brake line according to any one of the preceding claims,
**characterized in that**
the polyamide molding composition of the layer of I. comprises the following components:
- from 50 to 95 parts by weight of polyamide,
- from 1 to 49 parts by weight of functionalized or unfunctionalized polyolefin, and
- from 1 to 49 parts by weight of functionalized or unfunctionalized impact modifier,
the total of the parts by weight of these components being 100.

6. An air-brake line according to any one of the preceding claims,
**characterized in that**
the modulus of elasticity to ISO 527 of the molding composition forming the layer(s) of I. is from 300 to 800 MPa.

## Revendications

1. Conduite de frein pneumatique, qui contient les couches suivantes:
I. une couche extérieure en une masse moulée, qui contient à raison d'au moins 40 % en poids un polyamide, dont les unités de monomère contiennent en moyenne au moins 8 atomes de C,
III. une couche en une masse moulée de polypropylène, ainsi qu'une couche intérieure selon I. en une masse moulée, qui contient à raison d'au moins 40 % en poids un polyamide, dont les unités de monomère contiennent en moyenne au moins 8 atomes de C,
dans laquelle
a) le diamètre extérieur du tube se situe dans la plage de 6 à 20 mm,
b) l'épaisseur de paroi se situe dans la plage de 1,0 à 2,0 mm, et
c) l'épaisseur de la couche selon III. vaut de 25 à 75 % de l'épaisseur de paroi.

2. Conduite de frein pneumatique selon la revendication 1, **caractérisée en ce que** la couche suivante est disposée entre les couches suivant I. et III.:
II. une couche en une masse moulée d'agent adhésif, l'épaisseur de cette couche valant de 0,02 à 0,2 mm.

3. Conduite de frein pneumatique selon l'une quelconque des revendications précédentes, **caractérisée en ce que** le tube présente la configuration de couches I/II/III/II/I.

4. Conduite de frein pneumatique selon l'une quelconque des revendications précédentes, **caractérisée en ce que** la masse moulée de polyamide de la couche suivant I. contient d'autres composants, qui sont choisis dans le groupe des modificateurs de résilience, autres thermoplastiques, plastifiants, pigments, matières de charge, auxiliaires de traitement, agents retardateurs de flamme, fibres de verre, antioxydants, stabilisants UV, ainsi qu'additifs, qui confèrent au produit des propriétés anti-électrostatiques ou une conductibilité électrique, le polyamide formant la matrice de la masse moulée.

5. Conduite de frein pneumatique selon l'une quelconque des revendications précédentes, **caractérisée en ce que** la masse moulée de polyamide de la couche suivant I. contient les composants suivants:
- 50 à 95 parties en poids de polyamide,
- 1 à 49 parties en poids de polyoléfine fonctionnalisée ou non fonctionnalisée, ainsi que
- 1 à 49 parties en poids de modificateur de résilience fonctionnalisé ou non fonctionnalisé,
dans laquelle la somme des parties en poids de ces composants vaut 100.

6. Conduite de frein pneumatique selon l'une quelconque des revendications précédentes, **caractérisée en ce que** le module E selon ISO 527 de la masse moulée formant la couche ou les couches suivant I. vaut 300 à 800 MPa.
